(19) Europäisches Patentamt
European Patent Office
Office européen des brevets

(11) EP 3 770 832 A1

(12) EUROPEAN PATENT APPLICATION

(43) Date of publication:
27.01.2021 Bulletin 2021/04

(51) Int Cl.:
G06Q 10/06 (2012.01)   G06Q 50/04 (2012.01)

(21) Application number: 19187796.8

(22) Date of filing: 23.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nokia Technologies Oy
02610 Espoo (FI)

(72) Inventors:
• MARASCU, Alice
Dublin, DO2 VX56 (IE)
• LINDHOLM, Harri
00320 Helsinki (FI)
• SALA, Alessandra
Dublin (IE)

(74) Representative: Nokia EPO representatives
Nokia Technologies Oy
Karakaari 7
02610 Espoo (FI)

(54) **WORKLOAD DATA**

(57) An apparatus, method and computer program is described comprising: receiving data relating to a first operator performing at least part of a first task, wherein at least part of the data is received from one or more sensors; using a first workload model for determining, based on the received data, a workload of the first operator over a first time period; communicating information relating to the workload of the first operator to one or more receivers; and performing at least one of: monitoring the workload of the first operator; or altering the demands on the first operator based on at least one of the information relating to the workload of the first operator, or information relating to a respective workload of one or more other operators.

FIG. 1

**Description**

**Field**

The present specification relates to workload data, such as communications relating to workloads of operators.

**Background**

One or more operators may collaborate in a working environment to perform tasks. There remains a need for further improvements in this field.

**Summary**

In a first aspect, this specification provides an apparatus comprising: means for receiving data (e.g. from sensors) relating to a first operator performing at least part of a first task, wherein at least part of the data is received from one or more sensors; means for using a first workload model for determining, based on the received data, a workload of the first operator over a first time period; means for communicating information relating to the workload of the first operator to one or more receivers (e.g. other operators or a supervisory system); and means for performing at least one of: monitoring the workload of the first operator; or altering demands on the first operator based on at least one of the information relating to the workload of the first operator, or information relating to a respective workload of one or more other operators.

In some examples, the one or more other operators may comprise at least one of: operators performing at least another part of the first task; or operators performing at least a part of one or more other tasks.

In some examples, the received data relating to the first operator comprises at least one of performance data, self-reported data, physiological data, psychological data, biomechanical data, simulation data, morphological data, and connectional data.

In some examples, the one or more receivers comprise at least one of the one or more other operators and a supervisory system.

In some examples, the workload is updated over the first time period as the first operator is performing the at least part of the first task.

In some examples, the monitoring of the workload of the first operator comprises comparing the workload of the first operator with one or more workloads of the one or more other operators. Alternatively, or in addition, monitoring the workload of the first operator comprises comparing the workload of the first operator at different time instances of the first time period. Alternatively, or in addition, monitoring the workload of the first operator comprises analysing one or more patterns of evolution of workload of the first operator over the first time period.

In some examples, the altering of the demands on the first operator comprises balancing the demands on the first operator and demands on at least one of the one or more other operators based on one or more weights.

In some examples, communicating the workload to the receiver comprises inducing a trigger to the one or more other operators.

In some examples, at least part of the data relating to the first operator is received from one or more performance monitors.

In some examples, the first workload model comprises a machine learning model.

Some examples include means for training the first workload model using input sensor data relating to one or more operators and workload assessment inputs received from the one or more operators. The input sensor data may be received from at least one of one or more sensors and one or more performance monitors.

The means may comprise: at least one processor; and at least one memory including computer program code, the at least one memory and the computer program code configured, with the at least one processor, to cause the performance of the apparatus.

In a second aspect, this specification describes a method comprising: receiving data relating to a first operator performing at least part of a first task, wherein at least part of the data is received from one or more sensors; using a first workload model for determining, based on the received data, a workload of the first operator over a first time period; communicating information relating to the workload of the first operator to one or more receivers; and performing at least one of: monitoring the workload of the first operator; or altering the demands on the first operator based on at least one of the information relating to the workload of the first operator, or information relating to a respective workload of one or more other operators.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a supervisory system comprising: means for receiving information relating to workloads of one or more operators; wherein the information is determined using one or more workload models based on at least one of sensor data of the one or more operators and performance monitoring data of the one or more operators; means for balancing demands among the one or more operators based on one or more weights; and means for sending information regarding the balanced demands to the one or more operators.

In a sixth aspect, this specification describes a computer program comprising instructions for causing an apparatus to perform at least the following: receiving data relating to a first operator performing at least part of a first task; wherein at least part of the data is received from one or more sensors; using a first workload model for determining, based on the received data, a workload of the first operator over a first time period; communicating information relating to the workload of the first operator to one or more receivers; and performing at least one of: monitoring the workload of the first operator; or altering demands on the first operator based on at least one of the information relating to the workload of the first operator and, or information relating to a respective workload of one or more other operators.

In a sixth aspect, this specification describes a computer-readable medium (such as a non-transitory computer-readable medium) comprising program instructions stored thereon for performing at least the following: receiving data relating to a first operator performing at least part of a first task; wherein at least part of the data is received from one or more sensors; using a first workload model for determining, based on the received data, a workload of the first operator over a first time period; communicating information relating to the workload of the first operator to one or more receivers; and performing at least one of: monitoring the workload of the first operator; or altering demands on the first operator based on at least one of the information relating to the workload of the first operator and, or information relating to a respective workload of one or more other operators.

In a seventh aspect, this specification describes an apparatus comprising: at least one processor; and at least one memory including computer program code which, when executed by the at least one processor, causes the apparatus to: receive data relating to a first operator performing at least part of a first task; wherein at least part of the data is received from one or more sensors; use a first workload model for determining, based on the received data, a workload of the first operator over a first time period; communicate information relating to the workload of the first operator to one or more receivers; and perform at least one of: monitoring the workload of the first operator; or altering demands on the first operator based on at least one of the information relating to the workload of the first operator and, or information relating to a respective workload of one or more other operators.

## Brief description of the drawings

Example embodiments will now be described, by way of non-limiting examples, with reference to the following schematic drawings, in which:

FIG. 1 is a block diagram of a system in accordance with an example embodiment;
FIG. 2 is a block diagram of a system in accordance with an example embodiment;
FIG. 3 is a flow chart of an algorithm in accordance with an example embodiment;
FIGS. 4 to 10 are block diagrams of systems in accordance with example embodiments;
FIG. 11 to 13 are flow charts of algorithms in accordance with an example embodiment;
FIG. 14 shows a workload model in accordance with an example embodiment;
FIG. 15 is a flow chart of an algorithm in accordance with an example embodiment;
FIG. 16 is a block diagram of a system in accordance with an example embodiment;
FIG. 17 is a schematic diagram of components of one or more of the example embodiments and
FIGS. 18A and 18B show tangible media, respectively a removable non-volatile memory unit and a compact disc (CD) storing computer-readable code which when run by a computer perform operations according to embodiments.

## Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

When one or more operators perform one or more tasks in a collaborative working environment, it may be desirable to manage workloads of the operators.

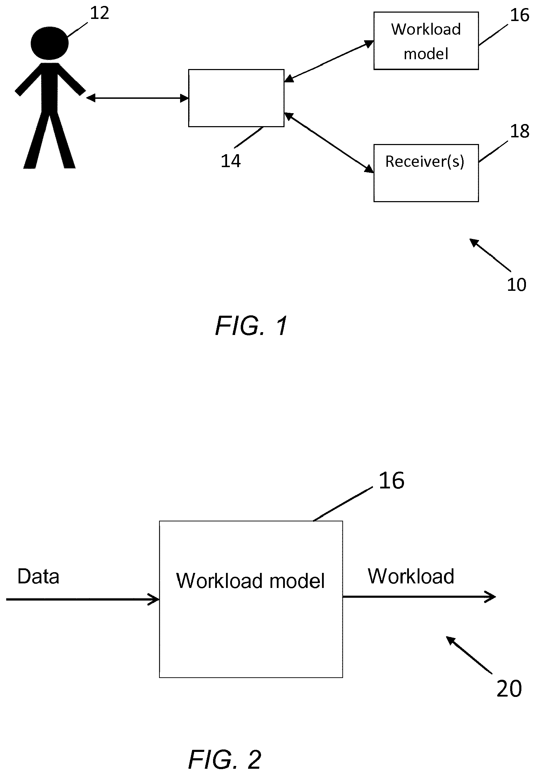

FIG. 1 is a block diagram of a system, indicated generally by the reference numeral 10, in accordance with an example embodiment. The system 10 comprises a first operator 12, a processor 14, a first workload model 16, and one or more receivers 18. The processor 14 may receive as inputs data relating to the first operator 12. The data may be received from one or more sensors. The processor 14 may use the first workload model 16 to determine a workload of the first operator, and may communicate information relating to the workload to the one or more receivers 18.

FIG. 2 is a block diagram of a system, indicated generally by the reference numeral 20, in accordance with an example embodiment. The first workload model 16 may receive, as inputs, data relating to an operator, for example the first operator 12. The first workload model 16 may then be used to determine a workload of the first operator 12. The first workload model 16 may then output the workload and provide the workload information to the processor 14. In an example embodiment, the first workload model 16 may optionally be comprised within a memory accessible by the processor 14. Alternatively, or in addition, the first workload model 16 may be comprised in a remote system which may be within communication capabilities of the processor 14.

A workload of an operator may be a measure of demands on the operator while the operator is performing at least part of one or more tasks. The workload may represent a total number of demands that may be placed on the operator in order to finish one or more tasks. The workload may further be a quantitative representation of the nature of the demands on the operator. For example, a first operator may be performing one part of a task with average difficulty level "low" and a second operator may be performing another part of the task with average difficulty level "high". The demands on the second operator may then be higher than the demands on the first operator due to the difference in difficulty level.

It may be appreciated that a workload may represent number of tasks, nature of tasks, time required to complete a task, and any other information about demands on the operator that may be computed using the workload model. Such demands may not be determined simply based on knowledge of what tasks an operator may be doing, as different operators may handle tasks differently, and the nature of the task itself may not accurately reflect the workload on different operators.

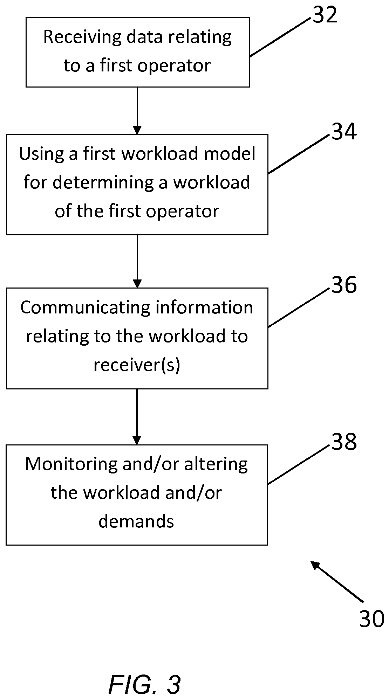

FIG. 3 is a flowchart of an algorithm, indicated generally by the reference numeral 30, in accordance with an example embodiment. FIG. 3 may be described with reference to one or more elements of FIG. 1. The algorithm 30 starts at operation 32 where data relating to the first operator 12 performing at least part of a first task is received. At least part of the data may be received from one or more sensors. For example, the sensors may be comprised in one or more wearable devices worn by the first operator 12, or may be comprised in another device relating to the first operator 12. Alternatively, or in addition, at least part of the data may be received from one or more performance monitors.

At operation 34, a first workload model, such as the first workload model 16, may be used for determining a workload of the first operator based on the received data.

At operation 36, information relating to the workload of the first operator is communicated to one or more receivers (such as the receiver(s) 18).

At operation 38, the workload of the first operator 12 may be monitored. Alternatively, or in addition, one or more demands on the first operator 12 may be altered based on information relating to the workload of the first operator and/or information relating to a respective workload of one or more other operators. For example, if it is determined that the workload of the first operator 12 is higher than a threshold, the demands on the first operator 12 (for example amount of tasks assigned or difficulty of tasks) may be reduced.

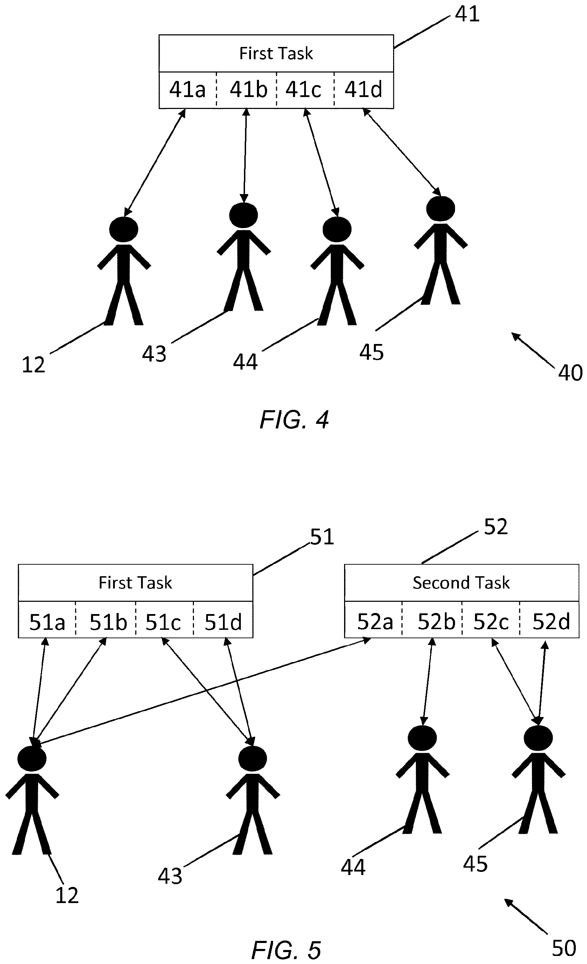

FIG. 4 is a block diagram of a system, indicated generally by the reference numeral 40, in accordance with an example embodiment. System 40 comprises one or more operators including the first operator 12, and one or more other operators including operators 43, 44, and 45. The first operator 12 and the one or more other operators 43 to 45 may each perform at least part of a first task 41. For example, the first operator 12 may perform part 41a of the first task 41, operator 43 may perform part 41b of the first task 41, operator 44 may perform part 41c of the first task 41, and operator 45 may perform part 41d of the first task 41. Demands on the first operator 12 may be based on information relating to the workload of the first operator 12 performing at least part 41a of the first task, and/or information relating to a respective workload of the operators 43 to 45 performing at least another respective part 41b to 41d of the first task. For example, the first task 41 may be building a computer software game. Part 41a may correspond to coding for a first module, part 41b may correspond to coding for a second module, part 41c may correspond to coding for graphics of the game, and part 41d may correspond to testing of the codes for parts 41a to 41c.

FIG. 5 is a block diagram of a system, indicated generally by the reference numeral 50, in accordance with an example embodiment. System 50 comprises one or more operators including the first operator 12, and one or more other operators including the operators 43, 44, and 45. The first operator 12 and the one or more other operators 43 to 45 may each perform at least part of a first task 51 and/or a second task 52. The one or more other operators described in operation 38 of the algorithm 30 may comprise operators performing at least part of one or more other tasks. For example, the first operator 12 may perform parts 51a and 51b of the first task 51, and part 52a of the second task 52; the operator 43 may perform parts 51c and 51d of the first task 51; the operator 44 may perform part 52b of the second task 52, and operator 45 may perform parts 52c and 52d of the second task 52. As such, the first operator 12 and other operators 43 to 45 may be performing any one or more parts of one or more tasks. With reference to the example of the task being building a computer software game, it may be appreciated that one or more operators may be working on one or more games (tasks) at a given time period. Further, in an example where the code may need to be tested by at least two operators, it may be said that one of the two operators is performing a first testing part (part of a task), and another one of the two operators is performing a second testing part (part of a task), even though the nature of their task may be the same.

In an example embodiment, one or more tasks may be related to extreme sports or military environments. In such environments, accurately measuring workload of one or more operators, and assigning tasks accordingly may assist in ensuring that efficiency of the one or more operators as a team is maximized. In one example, the workload of the first operator 12 may indicate whether the first operator 12 is assigned more demands than he/she may be capable of performing, or whether the first operator 12 is too tired to work efficiently, in which case the demands on the first operator 12 may be reduced in order to maximize efficiency. Similarly, if the workload of a second operator indicates that the second operator may be capable of performing more demands than the demands currently assigned to him/her, some of the demands of the first operator 12 may be assigned to the second operator, and thus the demands may be balanced among the one or more operators.

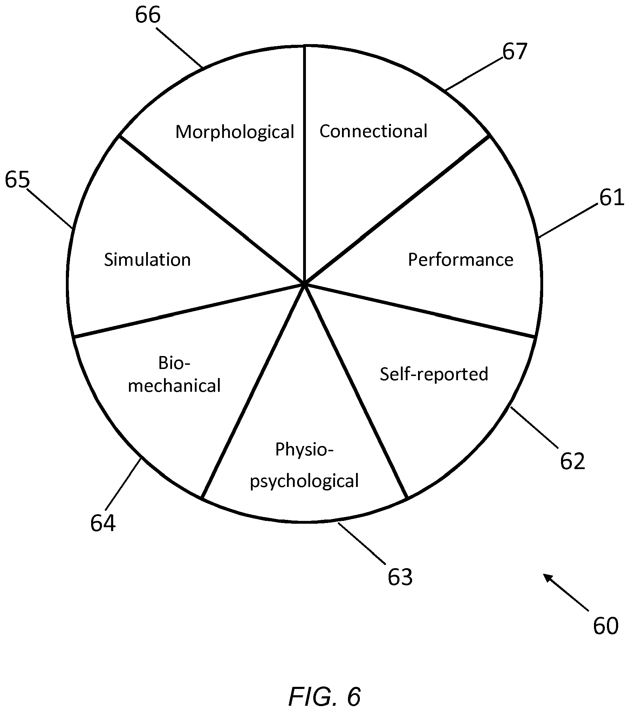

FIG. 6 is a block diagram of a system, indicated generally by reference numeral 60, in accordance with an example embodiment. The data relating to a first operator, for example the first operator 12 (as received from the one or more sensors) may comprise at least one of performance data 61, self-reported data 62, physio-psychological data 63, biomechanical data 64, simulation data 65, morphological data 66, and connectional data 67. In an example embodiment, the first workload model 16 may comprise a plurality of dimensions including one or more of performance, self-reported, physio-psychological, biomechanical, simulation, morphological, and connectional dimensions. Each dimension may correspond to one or more measurements. As discussed above, the workload model may receive as inputs one or more of the performance data 61, self-reported data 62, physio-psychological data 63, biomechanical data 64, simulation data 65, morphological data 66, and connectional data 67 in order to output information of a workload of the first operator 12.

In an example embodiment, performance data 61 may represent performance of the first operator 12 in at least part of one or more tasks. For example performance measurements may comprise one or more of accuracy, reaction time, number of correct operations, memory tests, mental arithmetic tests (for example forwards and backwards digits counting), and task dedicated tests (for example percentage of hits and misses). For example, such tests may be used for determining efficiency and accuracy of an operator performing a task. In one example, performance measurements may relate to a first task (primary task) being performed by an operator. The demands on the operator may relate to the first task. In this example, the performance of the operator in performing the first task may be affected by lack of appropriate skills of the operator, boredom of the operator, or inefficiency of the operator. In another example, the performance measurements may relate to more than one task (primary task and secondary task(s)) being performed by the operator. The primary task may be of higher priority than the secondary task(s). The performance of the operator in the primary task may be affected by the secondary tasks, as the operator may divide his attention or time between the primary and secondary tasks. For example, the primary and secondary tasks may use similar cognitive resources of the operator. Performance of the operator for both the primary task and the secondary task may be measured. Performance measurement in the second task may indicate available cognitive resources of the operator while performing the first task. Changes in performance for secondary tasks may be analysed by changing demands related to the primary task, and/or changes in performance for the primary task may be analysed by changing demands related to the secondary tasks. In this way, changes in performance of an operator may indicate how workload of the operator is affected by changing different demands on the operator.

In an example embodiment, self-reported data 62 may represent perception of an operator relating to demands on the operator. For example self-reported data measurements may include inputs from the operator indicating whether the demands on the operator are lower than a threshold, higher than a threshold, or measurements related to health, tiredness, stress, or the like, of the operator. The operator may be presented with a means to input the self-reported data. Example measurement scales for self-reported data may include NASA Task Load Index (NASA-TLX), subjective workload assessment technique (SWAT), Subjective workload dominance technique (SWORD), and Modified Cooper-Harper (MCH).

In an example embodiment, physio-psychological data 63 may represent physiological and/or psychological indicators for an operator. For example, physiological measurements may include heart rate, cardiac activity, respiratory activity, ocular activity, brain activity, sleep patterns, number of hours of sleep, body temperature, body sweat levels, or the like. Psychological measurements may include emotional state (for example determined by voice, facial expression patterns, gestures, postures, or the like), personal profile (for example personality data, past medical conditions, etc.), and emotional or physical feeling (for example happy, sad, in pain, etc.). Changes in physiological data may be analysed (for example to quantify metabolic rates or energy) while the operator is performing one or more parts of one or more tasks.

In an example embodiment, bio-mechanical data 64 may represent measurements related to posture of an operator. Posture measurements of the operator may indicate the posture of the operator while performing different tasks. The posture measurements may be used for determining a type or degree of muscle and/or skeletal stress on the operator. Information of the stresses on one or more muscles or one or more parts of the skeleton may indicate whether the operator has been assigned demands higher than a threshold which may be causing physical stress. Posture measurements may be based on self-reported data (for example the operator providing inputs regarding muscle pain or joints pain) or data from device(s) measuring posture and/or comparing the posture with ideal posture(s).

In an example embodiment, simulation data 65 may represent measurements related to prediction of an operator's workload. One or more simulation models may be used for predicting the operator's workload based on historical data (for example operator's workload for previous similar tasks). For example, a model may be created based on information relating to one or more aspects of one or more operators performing a task, including the one or more operators' communicating with one or more devices, timeline of the one or more operators performing a task, or any other aspect assisting in modelling one or more operators performance of a task. The information may be arranged according to tasks performed by the one or more operators. Based on the information, simulation models may model the one or more operators, sequence of tasks, and demands on the one or more operators while performing one or more respective parts of the one or more respective tasks. The simulation models may then be used for workload predictions for each user.

In an example embodiment, the morphological data 66 may represent measurements relating to impact of a form, shape or structure of devices used by an operator for performing one or more tasks. Both physical and mental tasks may comprise usage of one or more devices or tools. The form, shape, weight, structure, and/or comfort of use of the devices or tools may affect the workload of the operator. For example, performance of an operator performing a task of lifting objects may be affected by the size, shape, or weight of the objects. In another example, performance of an operator performing a task on a computer may be affected by a size of a screen, or physical aspects of one or more parts of the computer.

In an example embodiment, the connectional data 67 may represent measurements relating to collaboration between an operator and one or more other operators and/or collaboration between the operator and one or more devices or tools. For example, a team composition or connection may affect the performance of the operators in the team depending on one or more of personality, interests, and skills of the operators forming the team. Connectional data for collaboration between one or more operators may represent such connections between operators of the team. In another example, connectional data for collaboration between operators and one or more devices or tools may represent how the operator uses the device or tools, including usage skills, efficiency of using one or more devices or tools compared to other devices or tools for the same tasks, or the like.

In an example embodiment, one or more of the performance data 61, self-reported data 62, physio-psychological data 63, biomechanical data 64, simulation data 65, morphological data 66, and connectional data 67 may be used by a workload model to determine workload of an operator. The workload model may comprise one or more dimensions relating to the received data, the one or more dimensions including one or more of performance dimension, self-reported dimension, physio-psychological dimension, biomechanical dimension, simulation dimension, morphological dimension, and connectional dimension. The workload computed by the workload model may evolve and be updated as the operator continues performing the task (as the demands on the operator relating to the task may decrease as parts of the task has been performed). The workload model may therefore compute the workload of the operator at different instances of time over a time period.

In an example embodiment, the one or more dimensions (described above) of the workload model have equal weights in the workload model, and one or more measurements (described above) for each of the dimensions may also have equal weights. A mathematical formulation for computing the workload using the workload model at a time t1 may be formulated as:

$$WL_{T1} = \sum_{i=1}^{7} \sum_{j=0}^{n_j} \frac{m_j}{n_j}, j, n \in \mathbb{N},$$

where:

$WL_{t1}$ represents workload at time T1;
$i$ iterates over the dimensions;
$j$ iterates over measurements for dimension i;
$m_j$ represents values of the measurement; and
$n_j$ represents number of measurements for dimension $i$.

In an example embodiment, the one or more dimensions of the workload model may have equal weights in the workload model. One or more measurements for each of the dimensions may have different weights. A mathematical formulation for computing the workload using the workload model at a time t1 may be formulated as:

$$WL_{t1} = \sum_{i=1}^{7} \sum_{j=0}^{n_j} \frac{m_j \times w_{m_j}}{n_j}, j, n \in \mathbb{N},$$

where:

$WL_{t1}$ represents workload at time T1;
$i$ iterates over the dimensions;
$j$ iterates over the measurements for dimension i;
$m_j$ represents the values of the measurements;
$n_j$ represents number of measurements for dimension i; and

$w_{m_j} \in \mathbb{R}$ represents a weight for measurement $m_j$.

In an example embodiment, one or more dimensions may have different weights, and measurements of the one or more dimensions may have different weights. The workload may be computed by integrating weights of the one or more dimensions and measurements based on interactional relations among the dimensions. A mathematical formulation for computing the workload using the workload model at a time t1 may be formulated as:

$$WL_{t1} = \sum_{i=1}^{7} \sum_{j=0, k \in 1...7}^{n_j} \frac{m_j \times w_{m_j}|k}{n_j}, j, n \in \mathbb{N},$$

where:

$WL_{t1}$ represents workload at time T1;
$i$ iterates over the dimensions;
$j$ iterates over the measurements for dimension i;
$m_j$ represents the values of the measurements;
$n_j$ represents number of measurements for dimension i; and

$w_{m_j} \in \mathbb{R}$ represents a weight for measurement $m_j$;
$rel(i,j)$, $i,j \in 1... 7$ represents interactional relations among the dimensions; and
$k$ represents an index of interactional relation with $j$.

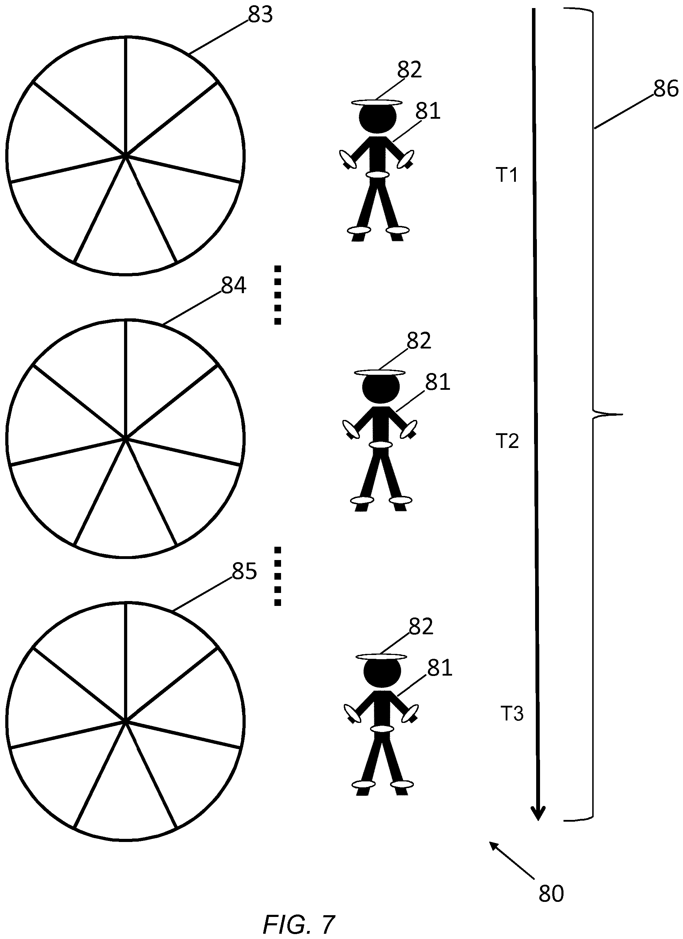

FIG. 7 is a block diagram of a system, indicated generally by the reference numeral 80, in accordance with an example embodiment. System 80 comprises a first operator 81 and one or more sensors 82. The sensors 82 may be wearable and/or non-wearable devices, and may also include performance monitors. As described above, the sensors 82 may be used for receiving (or generating) data related to the first operator 81, where the data may comprise one or more of performance data 61, self-reported data 62, physio-psychological data 63, biomechanical data 64, simulation data 65, morphological data 66, and connectional data 67. System 80 shows how workload of the first operator 81 may change over a first time period 86 as the first operator 81 performs at least part of one or more tasks. The change in the workload may be determined based on the data received from the sensors 82 (for example a continuous time series data over the first time period 86). The workload may be computed using the workload model described above. For example, at time T1, workload of the first operator 81 is represented by the workload 83. At time T2, workload of the first operator 81 is represented by the workload 84. At time T3, workload of the first operator 81 is represented by the workload 85. For example, at time T1, demands on the first operator 81 correspond to six parts of a first task (the parts may be considered as equal parts for simplicity). The workload 83 may be representative of the demands corresponding to six parts. Between time T1 and T2, the first operator 81 may complete two parts of the first task. The demands on the first operator 81 may reduce to correspond to the remaining four parts of the task. The workload 84 at time T2 may be representative of the reduced demands corresponding to four parts. Similarly, between time T2 and T3, the first operator 81 may complete three of the remaining four parts of the first task. The demands on the first operator 81 may reduce to correspond to the remaining one part of the task. The workload 84 at time T3 may be representative of the reduced demands corresponding to one part of the first task. It may be appreciated that the demands on the first operator 81 may reduce as the first operator 81 performs parts of a task, as well as increase if the first operator 81 is assigned with more tasks or parts of tasks. For example, a second task is assigned to the first operator 81 at time T2. The demands corresponding to the first task are reduced relative to the demands at time T1, and demands corresponding to the second task may increase relative to the demands corresponding to the second task at time T1.

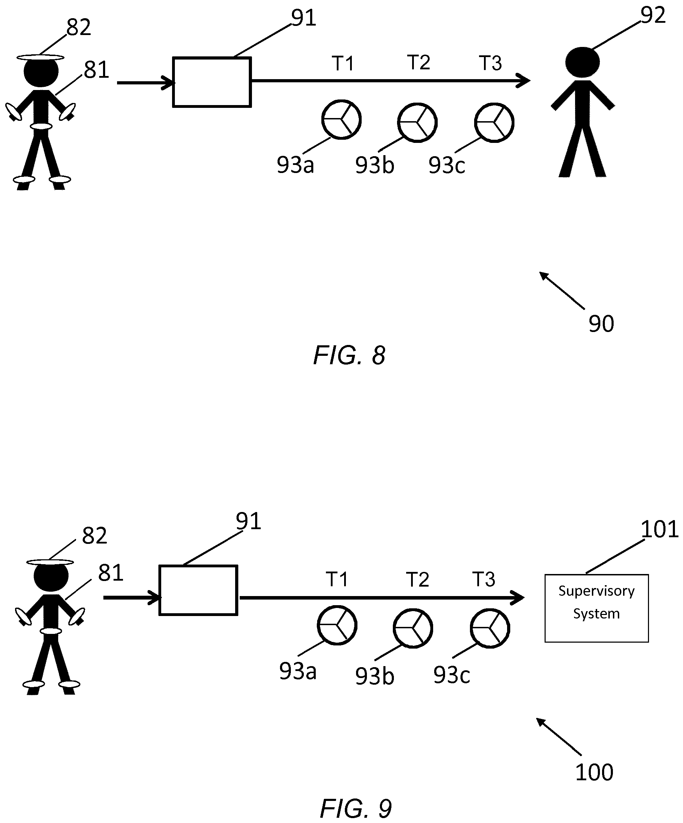

FIG. 8 is a block diagram of a system, indicated generally by the reference numeral 90, in accordance with an example embodiment. System 90 comprises a first operator 81, a processor 91, and a receiver, such as one or more other operators 92. The processor 91 may be configured to receive data related to the first operator 81 from one or more sensors 82. The processor 91 may be configured to use a workload model for determining a workload 93 of the first operator 81, and communicate information relating to the workload 93 to the one or more other operators 92. Workloads 93a, 93b, and 93c may represent a workload of the first operator 81 at time T1, T2, and T3 respectively. The processor 91 may therefore be configured to communicate information relating to an initial workload and subsequent updated workloads to the one or more operators 92.

FIG. 9 is a block diagram of a system, indicated generally by the reference numeral 100, in accordance with an example embodiment. System 100 comprises the first operator 81, the processor 91, and a receiver, such as a supervisory system 101. The processor 91 may be configured to receive data related to the first operator 81 from one or more sensors 82. The processor 91 may be configured to use a workload model for determining a workload 93 of the first operator 81, and communicate information relating to the workload 93 to the supervisory system 101. Workloads 93a, 93b, and 93c may represent a workload of the first operator 81 at time T1, T2, and T3 respectively. The processor 91 may therefore be configured to communicate information relating to an initial workload and subsequent updated workloads to the supervisory system 101.

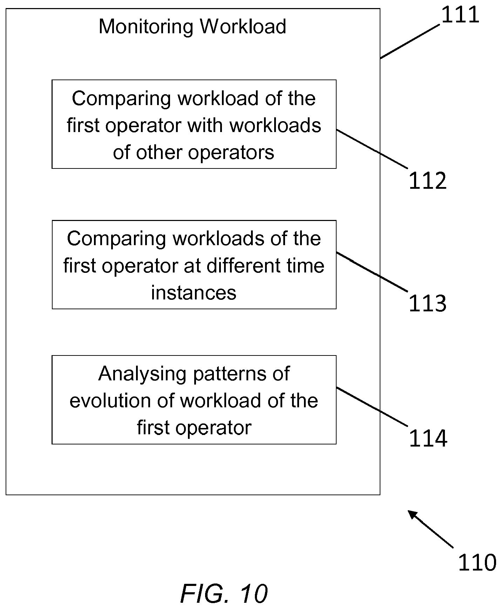

FIG. 10 is a block diagram of a system, indicated generally by the reference numeral 110, in accordance with an example embodiment. With reference to FIG. 3, operation 38, workload of the first operator may be monitored over the first time period. For example, the monitoring may be performed at a processor, such as processor 14 and/or 91. Alternatively, or in addition, the monitoring may be performed at a supervisory system, such as the supervisory system 101. With reference to system 110, the monitoring (111) of the workload may comprise one or more of operations 112, 113, and 114. For example, the monitoring (111) may comprise comparing (112) a workload of the first operator with workloads of one or more other operators. The first operator may be performing one or more parts of one or more tasks, and the one or more other operators may be performing one or more other parts of one or more tasks. Alternatively, or in addition, the monitoring (111) may comprise comparing (113) workloads of the first operator at different time instances of the first time period. For example, with reference to FIG. 7, monitoring (111) may comprise comparing (113) workloads 83, 84, and 85 at time instances T1, T2, and T3. Alternatively, or in addition, the monitoring (111) may comprise analysing (114) one or more patterns of evolution of workload of the first operator over the first time period. For example, the analysing may comprise analysing historical data and present data relating to workload of the first operator performing one or more types of tasks historically or at present. This may provide information of whether the first operator is improving at performing certain tasks as the first operator gets more experience at the task. For example, if the first operator has been doing similar tasks for a period of one year, the patterns of evolution of workload may be expected to show that the first operator has improved in efficiency and performance for the task over the period of one year.

In an example embodiment, a mathematical formulation for comparing (112) workloads of the first operator with workloads of one or more other operators may be formulated as:

$$WL_{A_{t1}-B_{t1}} = \sum_{i=1}^{7} \sum_{j=0,k\in 1..7}^{n_j} \frac{m_{Aj}-m_{Bj}}{n_j}, j, n \in \mathbb{N}$$

where:

$WL_{A\_t1-B\_t1}$ represents comparison of the workload of a first operator (A) with workloads of one or more other operators (B);
$i$ iterates over the dimensions;
$j$ iterates over the measurements for dimension i;
$m_j$ represents the values of the measurements; and
$n_j$ represents number of measurements for dimension $i$.

In an example embodiment, a mathematical formulation for comparing (113) workloads of the first operator at different time instances of the first time period may be formulated as:

$$WL_{A_{t1}-A_{t2}} = \sum_{i=1}^{7} \sum_{j=0,k\in 1..7}^{n_j} \frac{m_{A1j}-m_{A2j}}{n_j}, j, n \in \mathbb{N}$$

where:

$WL_{A\_t1-A\_t2}$ represents comparison of the workload of a first operator at different time instances;

$i$ iterates over the dimensions;

j iterates over the measurements for dimension i;

$m_j$ represents the values of the measurements; and

$n_j$ represents number of measurements for dimension i.

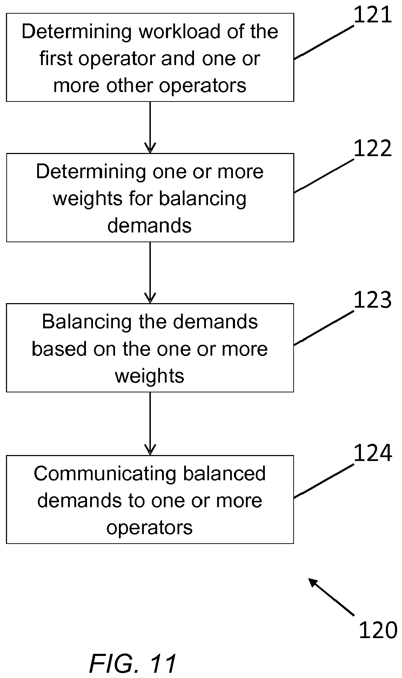

FIG. 11 is a flowchart of an algorithm, indicated generally by the reference numeral 120, in accordance with an example embodiment. With reference to FIG. 3, the altering of the demands on the first operator may be performed according to algorithm 120. The demands on the first operator may be altered based on at least one of the information relating to the workload of the first operator and information relating to a respective workload of one or more other operators. For example, the demands on the first operator, and/or the demands on the one or more other operators may be balanced in order to ensure that the operators are working with maximum efficiency, and do not have a workload higher than a threshold or lower than a threshold.

Algorithm 120 starts with operation 121 for determining a respective workload of a plurality of operators (including the first operator and one or more other operators). As discussed above, the workload may be determined using a workload model and data relating to the operators. For example, if the workload of one or more of the plurality of operators is determined to be more than a threshold and/or less than a second threshold, demands on the one or more operators may be altered in order to maximize efficiency.

At operation 122, one or more weights may be determined for balancing the demands placed upon the plurality of operators. For example, the weights may be defined based on one or more of experience, strength, knowledge, skills, expected working hours, expected holidays, or the like, of the plurality of operators. For example, an operator who has ten years of experience in performing a task may be more efficient in performing the task compared to an operator who is performing the task for the first time. The weights for demands on the operator with higher experience may therefore be higher, as he/she may be able to perform the task more efficiently.

At operation 123, the demands on one or more of the plurality of operators may be balanced based on the one or more weights. For example, demands on the first operator and demands on the one or more other operators are balanced based on the weights.

At operation 124, the balanced demands may be communicated to one or more of the plurality of operators. For example, the balanced demands on the first operator may be communicated to the first operator and/or one or more other operators. Similarly, the balanced demands on another operator may be communicated to the operator whose demands have been altered, and/or to one or more other operators of the plurality of operators.

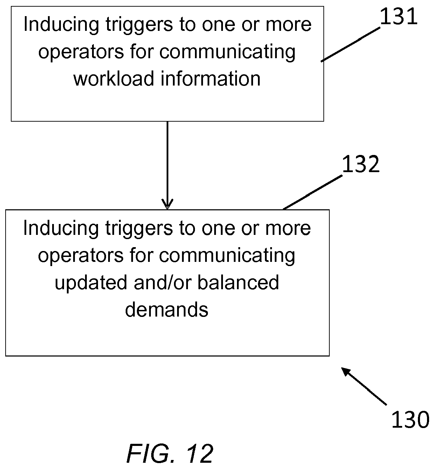

FIG. 12 is a flowchart of an algorithm, indicated generally by the reference numeral 130, in accordance with an example embodiment. With reference to operation 36 of FIG. 3, communicating the information relating to the workload of the first operator to a receiver (e.g, the one or more other operators) may comprise inducing triggers to the one or more operators at operation 131. At operation 132, in the event that demands on the first operator and/or one or more other operators are altered, triggers are induced to the one or more other operators for communicating the altered and/or balanced demands. For example, the triggers may comprise one or more of a visual indicator, audible indicator, haptic indicator, or the like.

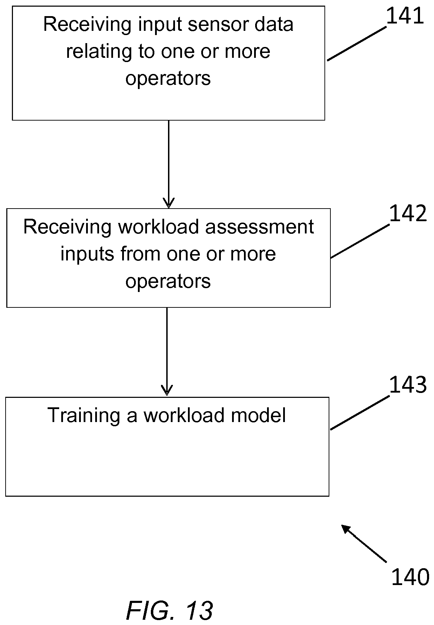

FIG. 13 is a flowchart of an algorithm, indicated generally by the reference numeral 140, in accordance with an example embodiment. Algorithm 140 may start with receiving input sensor data relating to one or more operators at operation 141. The input sensor data may comprise data relating to the one or more operators received from sensors and/or performance monitors. At operation 142, workload assessment inputs may be received from the one or more operators. The workload assessment inputs may be provided by the one or more operators based on their own perception of effort, stress, time, difficulty, etc. related to one or more tasks. At operation 143, a workload model may be trained using the inputs received at operations 141 and 142. In one example embodiment, one or more of the input sensor data and the workload assessment inputs may correspond to a plurality of operators performing the same first task (individually), such that the workload model may be trained with information regarding how each of the plurality of operators perform the first task (or similar tasks). Alternatively, or in addition, one or more of the input sensor data and the workload assessment inputs may correspond to a first operator performing a plurality of tasks, such that the workload model may be trained with information regarding how the first operator performs each of the plurality of the tasks. A mathematical formulation for training the workload model may be formulated as:

$$WL_{A\_T1} = \sum_{i=1}^{7} \sum_{j=0, k \in 1..7}^{n_j} \frac{m_{\max} - m_j}{n_j}, j, n \in \mathbb{N},$$

where:

$WL_{A\_T1}$ represents workload of a first operator at time T1;

$i$ iterates over the dimensions;

$j$ iterates over the measurements for dimension i;

$m_j$ represents the values of the measurement;

$n_j$ represents number of measurements for dimension i;

$w_{m_j} \in \mathbb{R}$ represents a weight for measurement $m_j$;

$rel(i,j)$, $i,j \in 1...7$ represents interactional relations among the dimensions;

$m_{max}$ represents maximum workload capability of the first operator; and

$k$ represents an index of interactional relation with $j$.

Alternatively, or in addition, one or more of the input sensor data and the workload assessment inputs may correspond to a plurality of operators performing a plurality of tasks (individually), such that the workload model may be trained with information regarding how each of the plurality of operators perform each of the plurality of tasks, and/or information regarding how one or more of the plurality of operators collaborate with each other to perform one or more tasks. The workload model may be trained with aggregated scores of the input sensor data used as weights for the workload model. A mathematical formulation for training the workload model with aggregated scores may be formulated as:

$$WL_{t1} = \sum_{i=1}^{7} \sum_{j=0,k\in1...7}^{n_j} \frac{m_j \times w_{m_j|cluster\_users}}{j}, \, j,n \in \mathbb{N}$$

where:

$WL_{t1}$ represents workload of the plurality of operators at time T1;

$i$ iterates over the dimensions;

$j$ iterates over the measurements for dimension i;

$m_j$ represents the values of the measurement;

$n_j$ represents number of measurements for dimension i;

$w_{m_j|cluster\_users} \in \mathbb{R}$ represents a weight for measurement $m_j$; where the weight is a value selected by majority of the plurality of operators (e.g. most voted value in a cluster of users);

$rel(i,j), i,j \in 1 ... 7$ represents interactional relations among the dimensions;

$m_{max}$ represents maximum workload capability of the first operator; and

$k$ represents an index of interactional relation with $j$.

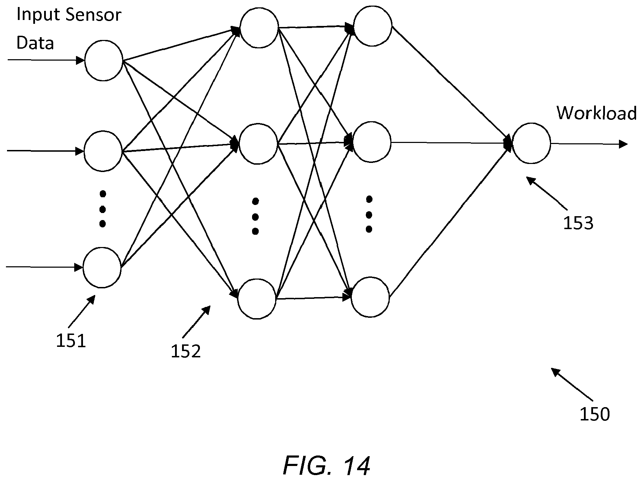

In an example embodiment, the workload model comprises a machine learning model, for example, a neural network. FIG. 14 shows a neural network, indicated generally by the reference numeral 150, used in some example embodiments. For example, the first workload model 16 may comprise the neural network 150. The neural network 150 may be trained, as described above with reference to FIG. 13. The neural network 150 comprises an input layer 151, one or more hidden layers 152, and an output layer 153.

At the input layer 151, the data relating to the first operator is received as an input. The hidden layers 102 may comprise a plurality of hidden nodes, where the cognitive analytics (e.g. machine learning modelling for cognitive analysis) are performed corresponding to the data received. At the output layer 153, information regarding workload of the first operator is provided as an output.

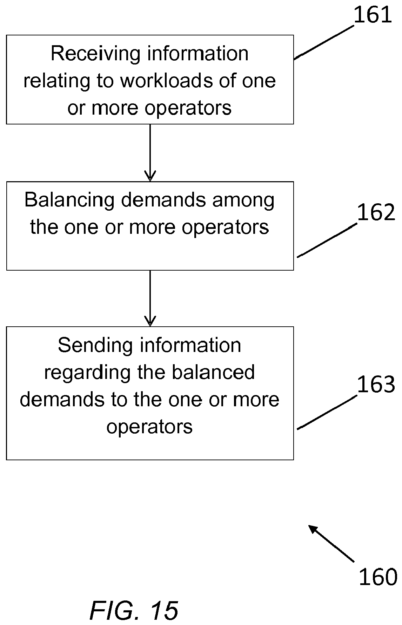

FIG. 15 is a flowchart of an algorithm, indicated generally by the reference numeral 160, in accordance with an example embodiment. In an example embodiment, the operations of the algorithm 160 may be performed at a supervisory system, for example supervisory system 101. At operation 161, information relating to workloads of one or more operators is received. The information may be determined (at the supervisory system, or at another device such as processor 91) using one or more workload models based on at least one of sensor data of the one or more operators and performance monitoring data of the one or more operators. At operation 162, demands on the one or more operators may be balanced among the one or more operators based on one or more weights (for example, as explained in FIG. 11). The operation 162 may be optional for one or more operators, such that demands on one or more operators may not be altered or balanced. At operation 163, information regarding the balanced demands may be sent to the one or more operators. For example, information regarding balanced demands of a first operator may be sent to the first operator and/or one or more other operators.

As described above with reference to FIG. 6, a workload model of a first operator may comprises one or more of a performance dimension, a self-reported dimension, a physiological dimension, a psychological dimension, a bio-mechanical dimension, a simulation dimension, a morphological dimension, or a connectional dimension. The workload model of the first operator may comprise any combination of these dimensions (including a combination of all of those dimensions). Moreover, the workload model of the first operator may comprise one or more (e.g. all) of the dimensions described above and one or more additional dimensions not described above.

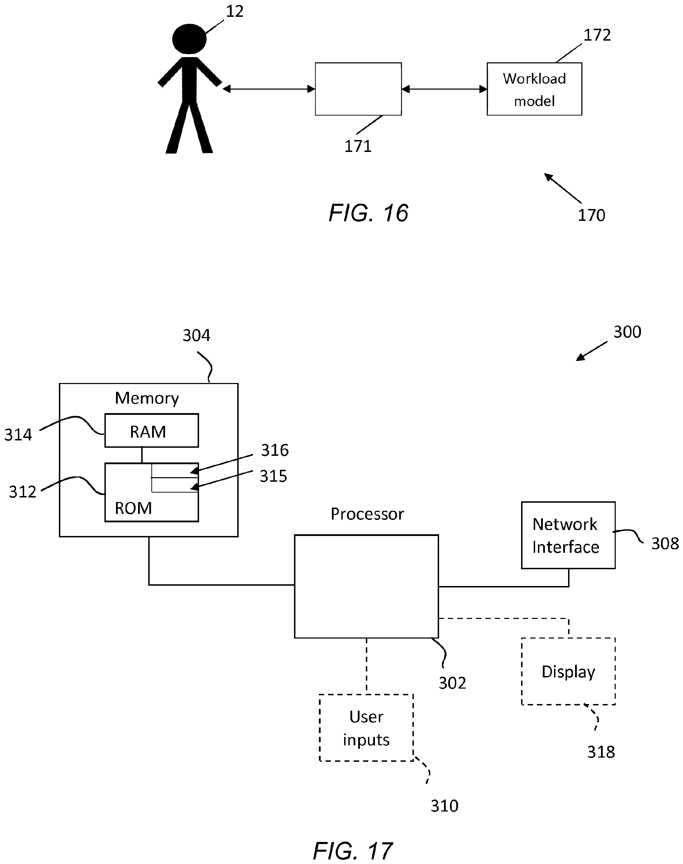

FIG. 16 is a block diagram of a system, indicated generally by the reference numeral 170, in accordance with an example embodiment. The system 170 comprises a first operator 12, a processor 171, and a first workload model 172. The processor 171 may receive as inputs data relating to the first operator 12, wherein the first operator may be performing at least part of a first task. The data may be received from one or more sensors. The processor 171 may use the first workload model 172 to determine a workload of the first operator. The processor 171 and the first workload model 172 may be similar to the processor 14 and the workload model 16 described above with reference to FIG. 1.

In an example aspect, this specification describes an apparatus comprising: means for receiving data relating to a first operator performing at least part of a first task, wherein at least part of the data is received from one or more sensors; and means for using a first workload model for determining, based on the received data, a workload of the first operator over a first time period, wherein the workload of the first operator comprises one or more of a performance dimension, a self-reported dimension, a physiological dimension, a psychological dimension, a biomechanical dimension, a simulation dimension, a morphological dimension, or a connectional dimension. The workload model of the first operator may comprise any combination of the dimensions described above (including a combination of all of those dimensions). Moreover, the workload model of the first operator may comprise one or more (e.g. all) of the dimensions described above and one or more additional dimensions not described above. In some examples, the first workload model comprises a machine learning model. Some examples include means for training the first workload model using input sensor data relating to one or more operators and workload assessment inputs received from the one or more operators. The input sensor data may be received from at least one of one or more sensors and one or more performance monitors. The said means may comprise: at least one processor; and at least one memory including computer program code, the at least one memory and the computer program code configured, with the at least one processor, to cause the performance of the apparatus.

In a further example aspect, this specification describes a method comprising: receiving data relating to a first operator performing at least part of a first task, wherein at least part of the data is received from one or more sensors; and using a first workload model for determining, based on the received data, a workload of the first operator over a first time period, wherein the workload of the first operator comprises one or more of a performance dimension, a self-reported dimension, a physiological dimension, a psychological dimension, a biomechanical dimension, a simulation dimension, a morphological dimension, or a connectional dimension. The workload model of the first operator may comprise any combination of the dimensions described above (including a combination of all of those dimensions). Moreover, the workload model of the first operator may comprise one or more (e.g. all) of the dimensions described above and one or more additional dimensions not described above. In some examples, the first workload model comprises a machine learning model.

In another example aspect, this specification describes computer-readable instructions which, when executed by computing apparatus, cause the computing apparatus to perform any method as described with reference to the second aspect.

In a further example aspect, this specification describes a computer program comprising instructions for causing an apparatus to perform at least the following: receiving data relating to a first operator performing at least part of a first task, wherein at least part of the data is received from one or more sensors; and using a first workload model for determining, based on the received data, a workload of the first operator over a first time period, wherein the workload of the first operator comprises one or more of a performance dimension, a self-reported dimension, a physiological dimension, a psychological dimension, a biomechanical dimension, a simulation dimension, a morphological dimension, or a connectional dimension.

In yet another example aspect, this specification describes a computer-readable medium (such as a non-transitory computer-readable medium) comprising program instructions stored thereon for performing at least the following: receiving data relating to a first operator performing at least part of a first task, wherein at least part of the data is received from one or more sensors; and using a first workload model for determining, based on the received data, a workload of the first operator over a first time period, wherein the workload of the first operator comprises one or more of a performance dimension, a self-reported dimension, a physiological dimension, a psychological dimension, a bio-mechanical dimension, a simulation dimension, a morphological dimension, or a connectional dimension.

In a seventh aspect, this specification describes an apparatus comprising: at least one processor; and at least one memory including computer program code which, when executed by the at least one processor, causes the apparatus to: receive data relating to a first operator performing at least part of a first task, wherein at least part of the data is received from one or more sensors; and use a first workload model for determining, based on the received data, a workload of the first operator over a first time period, wherein the workload of the first operator comprises one or more of a performance dimension, a self-reported dimension, a physiological dimension, a psychological dimension, a bio-mechanical dimension, a simulation dimension, a morphological dimension, or a connectional dimension.

For completeness, FIG. 17 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 30, 120, 130, 140 and 160 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

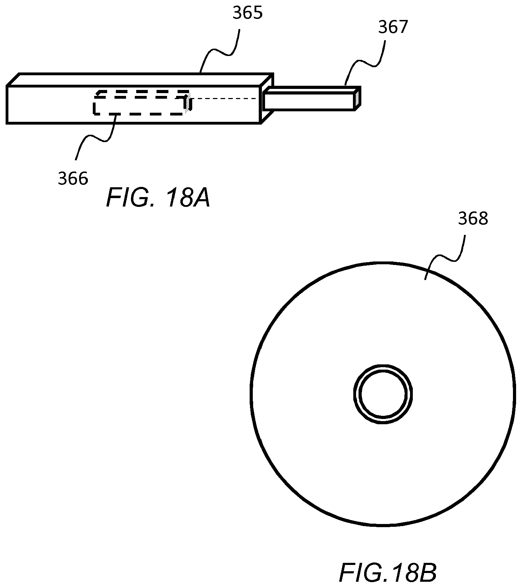

FIGs. 18A and 18B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 3, 11, 12, 13, and 15 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:

   means for receiving data relating to a first operator performing at least part of a first task; wherein at least part of the data is received from one or more sensors;
   means for using a first workload model for determining, based on the received data, a workload of the first operator over a first time period;
   means for communicating information relating to the workload of the first operator to one or more receivers; and
   means for performing at least one of:

   monitoring the workload of the first operator; or
   altering demands on the first operator based on at least one of the information relating to the workload of the first operator, or information relating to a respective workload of one or more other operators.

2. An apparatus as claimed in claim 1, wherein the one or more other operators comprise at least one of:

   operators performing at least another part of the first task; or
   operators performing at least a part of one or more other tasks.

3. An apparatus as claimed in any one of the preceding claims, wherein the received data relating to the first operator comprises at least one of performance data, self-reported data, physiological data, psychological data, biomechanical data, simulation data, morphological data, or connectional data.

4. An apparatus as claimed in any one of the preceding claims, wherein the one or more receivers comprises at least one of the one or more other operators or a supervisory system.

5. An apparatus as claimed in any one of the preceding claims, wherein the workload is updated over the first time period as the first operator is performing the at least part of the first task.

6. An apparatus as claimed in any one of the preceding claims, wherein monitoring the workload of the first operator comprises comparing the workload of the first operator with one or more workloads of the one or more other operators.

7. An apparatus as claimed in any one of the preceding claims, wherein monitoring the workload of the first operator comprises comparing the workload of the first operator at different time instances of the first time period.

8. An apparatus as claimed in any one of the preceding claims, wherein monitoring the workload of the first operator comprises analysing one or more patterns of evolution of workload of the first operator over the first time period.

9. An apparatus as claimed in any one of the preceding claims, wherein altering the demands on the first operator comprises balancing the demands on the first operator and demands on at least one of the one or more other operators based on one or more weights.

10. An apparatus as claimed in any one of the preceding claims, wherein communicating the workload to the receiver comprises inducing a trigger to the one or more other operators.

**11.** An apparatus as claimed in any one of the preceding claims, wherein at least part of the data relating to the first operator is received from one or more performance monitors.

**12.** An apparatus as claimed in any one of the preceding claims, further comprising means for training the first workload model using input sensor data relating to one or more operators and workload assessment inputs received from the one or more operators; wherein the input sensor data is received from at least one of one or more sensors and one or more performance monitors.

**13.** An apparatus as claimed in any one of the preceding claims, wherein the first workload model comprises a machine learning model.

**14.** A method comprising:

receiving data relating to a first operator performing at least part of a first task; wherein at least part of the data is received from one or more sensors;
using a first workload model for determining, based on the received data, a workload of the first operator over a first time period;
communicating information relating to the workload of the first operator to one or more receivers; and
performing at least one of:

monitoring the workload of the first operator; or
altering the demands on the first operator based on at least one of the information relating to the workload of the first operator, or information relating to a respective workload of one or more other operators.

**15.** A supervisory system comprising:

means for receiving information relating to workloads of one or more operators; wherein the information is determined using one or more workload models based on at least one of sensor data of the one or more operators and performance monitoring data of the one or more operators;
means for balancing demands among the one or more operators based on one or more weights; and
means for sending information regarding the balanced demands to the one or more operators.

**16.** A computer program comprising instructions for causing an apparatus to perform at least the following:

receiving data relating to a first operator performing at least part of a first task; wherein at least part of the data is received from one or more sensors;
using a first workload model for determining, based on the received data, a workload of the first operator over a first time period;
communicating information relating to the workload of the first operator to one or more receivers; and
performing at least one of:

monitoring the workload of the first operator; or
altering demands on the first operator based on at least one of the information relating to the workload of the first operator, or information relating to a respective workload of one or more other operators.

**17.** An apparatus comprising:

means for receiving data relating to a first operator performing at least part of a first task, wherein at least part of the data is received from one or more sensors; and
means for using a first workload model for determining, based on the received data, a workload of the first operator over a first time period, wherein the workload of the first operator comprises one or more of a performance dimension, a self-reported dimension, a physiological dimension, a psychological dimension, a biomechanical dimension, a simulation dimension, a morphological dimension, or a connectional dimension.

12

16

Workload
model

14

18

Receiver(s)

10

*FIG. 1*

16

Data

Workload model

Workload

20

*FIG. 2*

```
┌─────────────────────┐
│  Receiving data relating │ ╱ 32
│    to a first operator    │
└─────────────────────┘
           │
           ▼
┌─────────────────────┐
│ Using a first workload model │ ╱ 34
│ for determining a workload   │
│     of the first operator    │
└─────────────────────┘
           │
           ▼
┌─────────────────────┐
│  Communicating information   │ ╱ 36
│  relating to the workload to │
│         receiver(s)          │
└─────────────────────┘
           │
           ▼
┌─────────────────────┐
│  Monitoring and/or altering  │ ╱ 38
│     the workload and/or      │
│          demands             │
└─────────────────────┘
                                      ↖
                                        30
```

*FIG. 3*

FIG. 4

FIG. 5

FIG. 6

*FIG. 7*

82

91

81

T1    T2    T3

92

93a    93b    93c

90

*FIG. 8*

82

91

81

T1    T2    T3

101

Supervisory
System

93a    93b    93c

100

*FIG. 9*

Monitoring Workload 111

Comparing workload of the first operator with workloads of other operators 112

Comparing workloads of the first operator at different time instances 113

Analysing patterns of evolution of workload of the first operator 114

110

*FIG. 10*

Determining workload of the
first operator and one or
more other operators ⟋121

↓

Determining one or more
weights for balancing
demands ⟋122

↓

Balancing the demands
based on the one or more
weights ⟋123

↓

Communicating balanced
demands to one or more
operators ⟋124

120

*FIG. 11*

Inducing triggers to one or more operators for communicating workload information — 131

Inducing triggers to one or more operators for communicating updated and/or balanced demands — 132

130

*FIG. 12*

Receiving input sensor data relating to one or more operators — 141

Receiving workload assessment inputs from one or more operators — 142

Training a workload model — 143

140

*FIG. 13*

Input Sensor Data

Workload

151

152

153

150

*FIG. 14*

161

Receiving information
relating to workloads of one
or more operators

Balancing demands among
the one or more operators

162

Sending information
regarding the balanced
demands to the one or more
operators

163

160

*FIG. 15*

*FIG. 16*

*FIG. 17*

365

367

366

*FIG. 18A*

368

*FIG.18B*

Europäisches
Patentamt

European
Patent Office

Office européen
des brevets

# EUROPEAN SEARCH REPORT

Application Number

EP 19 18 7796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/335953 A1 (WOHL MICHAEL A [US] ET AL) 26 November 2015 (2015-11-26) * paragraphs [0005] - [0016] * ----- | 1-17 | INV. G06Q10/06 G06Q50/04 |
| X | US 2015/302323 A1 (CONNOLLY PAUL [US]) 22 October 2015 (2015-10-22) * paragraphs [0021] - [0026] * ----- | 1-17 | |

**TECHNICAL FIELDS SEARCHED (IPC)**

G06Q

The present search report has been drawn up for all claims

| Place of search | Date of completion of the search | Examiner |
|---|---|---|
| Munich | 15 November 2019 | Falò, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 7796

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2019

| Patent document cited in search report | Publication date | Patent family member(s) | Publication date |
|---|---|---|---|
| US 2015335953 A1 | 26-11-2015 | AU 2014274863 A1 | 07-01-2016 |
| | | AU 2014274901 A1 | 28-01-2016 |
| | | AU 2017239492 A1 | 26-10-2017 |
| | | CA 2914689 A1 | 11-12-2014 |
| | | CA 2914707 A1 | 11-12-2014 |
| | | EP 3005277 A1 | 13-04-2016 |
| | | EP 3005278 A1 | 13-04-2016 |
| | | EP 3005312 A2 | 13-04-2016 |
| | | EP 3570247 A1 | 20-11-2019 |
| | | US 2014361875 A1 | 11-12-2014 |
| | | US 2014361890 A1 | 11-12-2014 |
| | | US 2014361909 A1 | 11-12-2014 |
| | | US 2014362892 A1 | 11-12-2014 |
| | | US 2014364078 A1 | 11-12-2014 |
| | | US 2014364141 A1 | 11-12-2014 |
| | | US 2014364973 A1 | 11-12-2014 |
| | | US 2014364974 A1 | 11-12-2014 |
| | | US 2014364975 A1 | 11-12-2014 |
| | | US 2014364976 A1 | 11-12-2014 |
| | | US 2014364977 A1 | 11-12-2014 |
| | | US 2014364978 A1 | 11-12-2014 |
| | | US 2014365194 A1 | 11-12-2014 |
| | | US 2014365415 A1 | 11-12-2014 |
| | | US 2014365639 A1 | 11-12-2014 |
| | | US 2014365640 A1 | 11-12-2014 |
| | | US 2015002272 A1 | 01-01-2015 |
| | | US 2015335952 A1 | 26-11-2015 |
| | | US 2015335953 A1 | 26-11-2015 |
| | | US 2015335954 A1 | 26-11-2015 |
| | | US 2016126989 A1 | 05-05-2016 |
| | | US 2016361595 A1 | 15-12-2016 |
| | | US 2017056721 A1 | 02-03-2017 |
| | | US 2017173387 A1 | 22-06-2017 |
| | | US 2017257127 A1 | 07-09-2017 |
| | | US 2017317702 A1 | 02-11-2017 |
| | | US 2018241422 A1 | 23-08-2018 |
| | | WO 2014197575 A1 | 11-12-2014 |
| | | WO 2014197618 A2 | 11-12-2014 |
| | | WO 2014197623 A1 | 11-12-2014 |
| | | WO 2014197679 A1 | 11-12-2014 |
| US 2015302323 A1 | 22-10-2015 | NONE | |

EPO FORM P0459

For more details about this annex : see Official Journal of the European Patent Office, No. 12/82